# EUROPEAN PATENT APPLICATION

(11) **EP 4 339 034 A1**
(43) Date of publication of application: **20.03.2024**
(21) Application number: 22196066.9
(22) Date of filing: 16.09.2022
(51) Int. Cl.: B60R 19/24

(54) **CRASH MANAGEMENT SYSTEM FOR A MOTOR VEHICLE**

(71) Applicant: Constellium Singen GmbH, 78224 Singen (DE)
(72) Inventor: MUELLER, Andre, 78247 HILZINGEN (DE); FEUERSTEIN, Martin, 78224 SINGEN (DE)
(74) Representative: Constellium - Propriété Industrielle

(57) **Abstract**

The invention relates to a crash management system (100) for a motor vehicle (10; 10a), the crash management system (100) comprising a crossbeam (10; 10a) extending substantially along a transverse direction (Y), the crossbeam (10; 10a) comprising two crash boxes (40; 40a) disposed at a distance from one another, the crossbeam (10; 10a) being fixable to a vehicle structure, and the crossbeam (10; 10a) comprising a closed cross section having a front flange (14; 14a), a rear flange (12; 12a) and two transverse walls (16, 18) connecting the front flange (14; 14a) to the rear flange (12; 12a).

## Description

### FIELD OF THE INVENTION

The invention relates to a crash management system for a motor vehicle which is characterized by particularly advantageous properties by a compact size in the longitudinal direction of the vehicle and which is characterized by a crossbeam as rigid as possible on the one hand and the best possible energy absorption by the crash boxes on the other hand.

### BACKGROUND

A crash management system for a motor vehicle having the features of the preamble of claim 1 is known from US 2011/0012381 A1. The known crash management system comprises a crossbeam which has a closed cross section. To this end, the crossbeam comprises a front flange, a rear flange and two transverse walls connecting the front flange to the rear flange. The crossbeam can be connected to a vehicle structure by means of two crash boxes disposed at a distance from one another. It is essential that the crash boxes are adjacent to the rear flange, i.e. that the crash boxes are located outside the cross section of the crossbeam.

In a crash management system for a motor vehicle, DE 10 2004 008 740 A1 also discloses the use of a crossbeam which is configured as an extruded part which has an extrusion direction which extends in a vertical or Z direction. The crossbeam comprises recesses in the area of the crash boxes, the recesses being configured to receive a section or a partial length of the crash boxes. Thus, such a crash management system allows for particularly long crash boxes for a given total length defined in the longitudinal direction of the vehicle, the cross section of the crossbeam in the area of the crash boxes being reduced by the recesses compared to the areas outside the crash boxes.

### DESCRIPTION OF THE INVENTION

The crash management system for a motor vehicle according to the invention having the features of claim 1 has the advantage that it enables the use of particularly deep or long crossbeams in the longitudinal direction of the vehicle for a given total length extending in the longitudinal direction of the vehicle, the crash boxes being advantageously disposed in operative connection with the crossbeam at the same time.

The invention is based on the idea of using the available length of the crash management system in the longitudinal direction of the vehicle to form a crossbeam which is as deep as possible in the longitudinal direction of the vehicle and at the same time to integrate or dispose the crash boxes in the cross section of the crossbeam. As a result, the crossbeam is fastened to the vehicle structure by means of fastening elements which, in terms of their functionality, essentially serve only to fasten the crossbeam but not to provide particularly good crash or deformation properties.

Hence, in view of the explanations above, it is an object of the invention to propose a crash management system a for a motor vehicle, the crash management system comprising a crossbeam extending substantially along a transverse direction, the crossbeam comprising two crash boxes disposed at a distance from one another, the crossbeam being fixable to a vehicle structure, and the crossbeam comprising a closed cross section having a front flange a rear flange and two transverse walls connecting the front flange to the rear flange characterized in that the crash boxes are disposed within the closed cross section of the crossbeam, and that the crossbeam is connected to two fastening elements in the area of the rear flange, the fastening elements being connectable to the vehicle structure and being at least substantially aligned with the crash boxes in a longitudinal direction of the crossbeam.

Furthermore, it is mentioned that openings for a tow sleeve may be provided on the front flange and, if applicable, on the rear flange of the crossbeam in the area of the crash boxes; however, such a cross section of the crossbeam is intended to be part of the scope of the invention.

Advantageous embodiments of the crash management system for a motor vehicle according to the invention are indicated in the dependent claims.

In order to use the available depth of the cross section of the crossbeam extending in the longitudinal direction of the vehicle as fully as possible for the arrangement of the crash boxes, the crash boxes are preferably disposed in contact with the rear flange and with the front flange of the crossbeam. As a result, the entire depth of the cross section of the crossbeam is used to receive the crash boxes in the crossbeam in order to maximize their length which is particularly relevant for the crash properties.

With a view to stiffening the crossbeam or to realizing the best possible deformation properties of the crossbeam, another embodiment provides that the front flange comprises a recess which extends in the transverse direction of the crossbeam and which extends at a distance from the transverse walls of the crossbeam.

In order to clearly position the crash boxes in the cross section of the crossbeam in relation to the longitudinal direction of the vehicle and to the main extension direction of the crossbeam, another advantageous embodiment provides that the transverse walls of the crossbeam comprise cross bars which extend in the transverse direction of the crossbeam and which are in contact with the crash box, a distance thus being formed between the respective transverse wall and the crash box.

With respect to the configuration of the fastening elements to dispose the crossbeam on the vehicle structure, the fastening elements are particularly preferably made of an extruded profile section whose extrusion direction extends perpendicular to the transverse direction of the crossbeam.

A preferred embodiment of such a fastening element provides that the fastening element has a fastening plate which can be connected to the rear flange on the side which faces the rear flange and another fastening plate which can be connected to the vehicle structure on the side of the fastening plate which faces away from the rear flange.

In particular, an embodiment can provide that the fastening plate projects beyond the crossbeam in the area of the two transverse walls. This is particularly advantageous in the context of the formation of welds for fastening the fastening elements to the crossbeam. This also eliminates the need for additional fastening elements such as screws to fasten the fastening elements to the crossbeam.

To set the defined distance between the vehicle structure and the crossbeam while keeping the weight of the fastening elements as low as possible, it is also advantageous if the fastening elements comprise bars which extend in a direction perpendicular to the transverse direction of the crossbeam between the two fastening plates. The distance between the two fastening plates can thus be varied or adjusted very easily via the size of the bars.

The crash box is preferably made of aluminum or an aluminum alloy. Such crash boxes can be formed either by welding individual elements or plates or by an extruded profile.

Another preferred embodiment provides that the crossbeam is also made of aluminum or an aluminum alloy and is configured as an extruded part. In addition to a relatively low weight and good deformation properties of the crossbeam, this also allows the crossbeam to be welded to the fastening elements (which are used to fasten the crash management system to the vehicle structure). Alternatively, the crossbeam can be composed of several preformed (sheet metal) parts which are connected to one another.

The crossbeam can also be at least partially curved in the transverse direction. This allows particularly good adaptation of the form of the crossbeam to the outer contour of the vehicle.

Other advantages, features and details of the invention are apparent from the following description of preferred embodiments of the invention and from the drawings.

### DESCRIPTION OF THE DRAWING:

- Fig. 1: shows a perspective illustration of a crash management system for a motor vehicle,
- Fig. 2: is a section of the crash management system according to Fig. 1 in the area of its crossbeam comprising a crash box disposed therein,
- Fig. 3: is a simplified illustration of a crash management system using a crossbeam composed of several components,
- Fig. 4: is a cross section of the crossbeam of Fig. 3 in plane IV-IV of Fig. 3, and
- Fig. 5: is a section of the crash management system of Fig. 3 in the area of a crash box clarifying the arrangement of a receiving sleeve for a tow sleeve.

### DETAILED DESCRIPTION OF THE INVENTION

Identical elements or elements having the same function are provided with the same reference numerals in the figures.

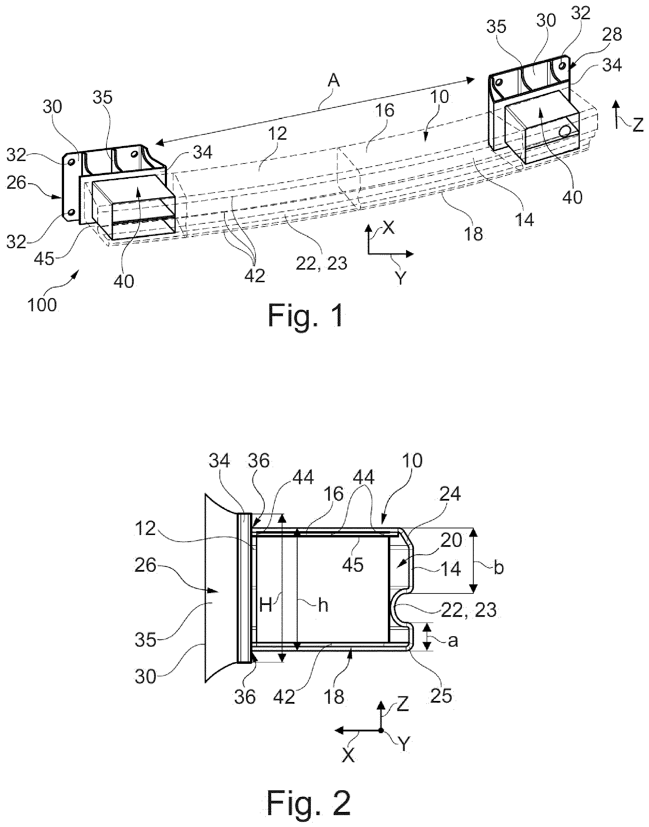

Fig. 1 shows the essential components of a crash management system 100 for a motor vehicle, in particular for a rear of a motor vehicle. Alternatively, or additionally, however, crash management system 100 can also be provided on a front of the motor vehicle. Crash management system 100 comprises a crossbeam 10 which is preferably configured as an extruded part made of aluminum.

Crossbeam 10 has a main extension direction which extends in a transverse direction Y. A longitudinal direction X which extends parallel to or is aligned with the longitudinal direction of the vehicle extends perpendicular to transverse direction Y. A vertical direction Z of crossbeam 10 extends perpendicular to transverse direction Y and longitudinal direction X. Transverse direction Y, longitudinal direction X and vertical direction Z thus form the axes of a Cartesian coordinate system.

In the shown exemplary embodiment, crossbeam 10 is evenly curved in transverse direction Y, but crossbeam 10 can also be linear or only partially curved.

Crossbeam 10 has a rear flange 12 which faces the side of the vehicle front (not shown), a front flange 14 which is disposed parallel to rear flange 12 and two transverse walls 16, 18 which connect rear flange 12 to front flange 14. As can be seen in particular from Fig. 2, the cross section of crossbeam 10 is at least substantially rectangular, the cross section being configured as a closed cross section having (at least) one chamber 20.

In the area of front flange 14, front flange 14 also has a recess 22 in the form of a bead 23 which extends in transverse direction Y and which is approximately semicircular in the exemplary embodiment. Recess 22 has a respective distance a, b from the two transverse walls 16, 18. In transverse direction Y, front flange 14 also has a chamfer 24 on the side which faces upper transverse wall 16 and a curvature 25 on the side which faces lower transverse wall 18.

Crossbeam 10 described above can be connected to a vehicle structure (not shown), in particular to longitudinal beams of the vehicle structure, by means of two fastening elements 26, 28 which are disposed at a distance A from one another. To this end, the two fastening elements 26, 28, which are each configured as an extruded part made of aluminum and which have an extrusion direction which extends in vertical direction Z, have a first fastening plate 30 which faces the vehicle structure and which has screw holes 32 for the fastening to the vehicle structure. The two fastening elements 26, 28 comprise a second fastening plate 34 which is spaced apart from first fastening plate 30 and which is monolithically connected to first fastening plate 30 via bars 35 which extend in vertical direction Z. Second fastening plate 34 has a height H in vertical direction Z which is greater than height h of crossbeam 10, second fastening plate 34 being connected to crossbeam 10 via welds 36 extending in transverse direction Y.

Two crash boxes 40 are disposed in chamber 20 of crossbeam 10 in alignment with the two fastening elements 26, 28 in longitudinal direction X of crossbeam 10. For example, crash box 40 (shown in a very simplified manner in the figures) is made of aluminum or aluminum components connected to one another or is configured as an extruded part made of aluminum.

Alternatively, crash box 40 can be made of any other suitable material or can have another form in contrast to the shown cubic form. It is only essential that crash box 40 has the typical deformation properties for crash boxes 40 to absorb energy. Crash box 40 is thus integrated into the cross section of crossbeam 10, crash box 40 being in contact with rear flange 12 and front flange 14 in the area of recess 22.

Furthermore, the cross section of crossbeam 10 comprises cross bars 42, 44 which extend in transverse direction Y and which are formed monolithically with the two transverse walls 16, 18, three cross bars 42 or 44 being disposed on the side facing crash box 40, a distance or gap 45 thus being formed between transverse walls 16, 18 and crash box 40. Cross bars 42, 44 allow a positioning or contact of crash box 40 in vertical direction Z.

Crash boxes 40 are assembled by inserting them into the cross section or into chamber 20 of crossbeam 10. Crash boxes 40 can then either be connected to crossbeam 10 by additional fastening elements such as screws or crossbeam 10 is deformed from the outside in order to form a force-fitting connection with crash boxes 40.

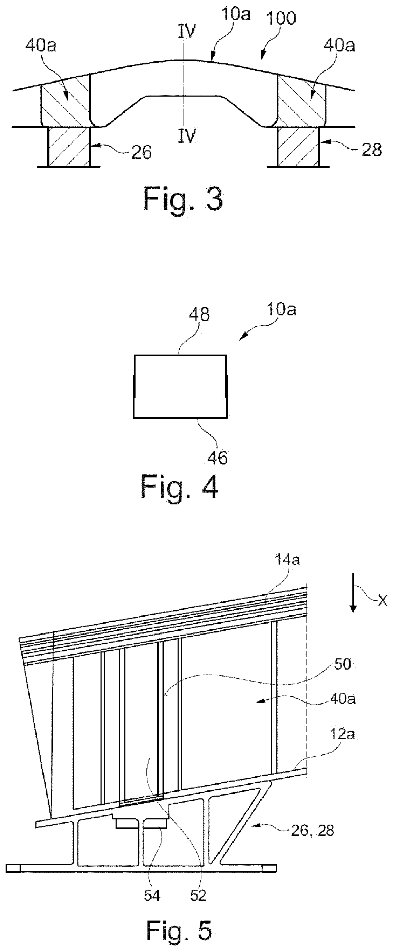

Figs. 3 to 5 show an altered crash management system 100 in which its crossbeam 10a is composed of several components 46, 48 (two half-shell-type components 46, 48 in the present case) which partially overlap one another and which are preferably connected to one another by a weld (not shown). In particular, the two components 46, 48 are composed of bent or deep-drawn sheet metal parts, preferably made of aluminum or an aluminum alloy or of steel or a steel alloy.

As shown in Fig. 5, crash box 40a comprises a passage opening 50 which has an (internal) thread section and which extends in longitudinal direction X, tow sleeve 52 being screwed into passage opening 50 from the side of fastening element 26, 28 via an external thread formed on tow sleeve 52. In a manner known per se, tow sleeve 52 is used to fasten a towing eye (not shown). Moreover, crossbeam 10a comprises openings in the area of its rear flange 12a and of its front flange 14a in order to insert the towing eye into the cross section of crossbeam 10a and to dispose a rear end section 54 of tow sleeve 52 which protrudes from crossbeam 10a in a blind-hole-formed reception of fastening element 26, 28.

It is additionally mentioned that tow sleeve 52 can be disposed in the same manner on crossbeam 10 or crash box 40.

This described crash management system 100 can be altered or modified in many ways without departing from the idea of the invention. For example, it is conceivable to compose crossbeam 10 from various individual components as a welded component rather than as an extruded part.

### List of references:

10, 10a: crossbeam
12, 12a: rear flange
14, 14a: front flange
16: transverse wall
18: transverse wall
20: chamber
22: recess
23: bead
24: chamfer
25: curvature
26: fastening element
28: fastening element
30: fastening plate
32: screw hole
34: fastening plate
35: bar
36: weld
40, 40a: crash box
42: crossbeam
44: crossbeam
46: component
48: component
50: passage opening
52: tow sleeve
54: end section
100: crash management system
a, b: distance
A: distance
h, H: height
X: longitudinal direction
Y: transverse direction
Z: vertical direction

## Claims

1. A crash management system (100) for a motor vehicle (10; 10a), the crash management system (100) comprising a crossbeam (10; 10a) extending substantially along a transverse direction (Y), the crossbeam (10; 10a) comprising two crash boxes (40; 40a) disposed at a distance from one another, the crossbeam (10; 10a) being fixable to a vehicle structure, and the crossbeam (10; 10a) comprising a closed cross section having a front flange (14; 14a), a rear flange (12; 12a) and two transverse walls (16, 18) connecting the front flange (14; 14a) to the rear flange (12; 12a),
**characterized in that**
the crash boxes (40; 40a) are disposed within the closed cross section of the crossbeam (10; 10a), and that the crossbeam (10; 10a) is connected to two fastening elements (26, 28) in the area of the rear flange (12; 12a), the fastening elements (26, 28) being connectable to the vehicle structure and being at least substantially aligned with the crash boxes (40; 40a) in a longitudinal direction (X) of the crossbeam (10; 10a).

2. The crash management system according to claim 1,
**characterized in that**
the crash boxes (40; 40a) are disposed in contact with the rear flange (12; 12a) and the front flange (14; 14a).

3. The crash management system according to claim 1 or 2,
**characterized in that**
the front flange (14) comprises a recess (22) which extends in the transverse direction (Y) of the crossbeam (10) and which extends at a distance (a, b) from the transverse walls (16, 18) of the crossbeam (10).

4. The crash management system according to any one of claims 1 to 3,
**characterized in that**
the transverse walls (16, 18) of the crossbeam (10) comprise cross bars (42, 44) which extend in the transverse direction (Y) of the crossbeam (10) and which are in contact with the crash box (40), a distance thus being formed between the respective transverse wall (16, 18) and the crash box (40).

5. The crash management system according to any one of claims 1 to 4,
**characterized in that**
the fastening elements (26, 28) are made of an extruded profile section whose extrusion direction extends perpendicular to the transverse direction (Y) of the crossbeam (10) in a vertical direction (Z).

6. The crash management system according to claim 5,
**characterized in that**
the fastening elements (26, 28) have a fastening plate (34) which can be connected to the rear flange (12; 12a) on the side which faces the rear flange (12; 12a) and another fastening plate (30) which can be connected to the vehicle structure on the side of the fastening plate (34) which faces away from the rear flange (12; 12a).

7. The crash management system according to claim 6,
**characterized in that**
the fastening plate (34) assigned to the rear flange (12; 12a) projects beyond the crossbeam (10; 10a) on both sides in the area of the rear flange (12; 12a) in a vertical direction (Z) which extends perpendicular to the transverse direction (Y).

8. The crash management system according to claim 6 or 7,
**characterized in that**
the fastening plate (34) is connected to the rear flange (12; 12a) of the crossbeam (10; 10a) by a weld (36).

9. The crash management system according to any one of claims 5 to 8,
**characterized in that**
the fastening element (26, 28) comprises bars (35) which extend in the vertical direction (Z) between the two fastening plates (30, 34).

10. The crash management system according to any one of claims 1 to 9,
**characterized in that**
the crash box (40; 40a) is made of aluminum or an aluminum alloy.

11. The crash management system according to any one of claims 1 to 10,
**characterized in that**
the crossbeam (10; 10a) is made of aluminum or an aluminum alloy and is configured as an extruded part or is composed of several preformed components (46, 48) which are connected to one another.

12. The crash management system according to any one of claims 1 to 11,
**characterized in that**
the crossbeam (10; 10a) is at least partially curved in the transverse direction (Y).

13. The crash management system according to any one of claims 1 to 12,
**characterized in that**
the crossbeam (10; 10a) is configured to be disposed at a rear area of the motor vehicle.

14. The crash management system according to any one of claims 1 to 13,
**characterized in that**
a tow sleeve (52) is disposed in the crossbeam (10a) in the area of the crash box (40a).
